# EUROPÄISCHE PATENTSCHRIFT

(11) **EP 2 449 616 B1**
(45) Veröffentlichungstag und Bekanntmachung des Hinweises auf die Patenterteilung: **06.08.2014**
(21) Anmeldenummer: 10726978.9
(22) Anmeldetag: 29.06.2010
(51) Int. Cl.: H01M 4/24, H01M 4/26, H01M 4/30, H01M 4/38, H01M 4/62, H01M 10/34, H01M 10/42, C01B 3/00, H01M 4/36, H01M 4/04, H01M 4/02

(54) **MIT EINEM ORGANISCH MODIFIZIERTEN (HETERO-)KIESELSÄUREPOLYKONDENSAT BESCHICHTETE, EINEN METALLISCHEN, ZUR WASSERSTOFFSPEICHERUNG GEEIGNETEN KERN ENTHALTENDE PARTIKEL, DAMIT HERGESTELLTE BATTERIEN SOWIE VERFAHREN ZU DEREN HERSTELLUNG UNTER VERWENDUNG DER PARTIKEL**
PARTICLES COATED WITH AN ORGANICALLY MODIFIED (HETERO)SILICIC ACID POLYCONDENSATE AND CONTAINING A METAL CORE SUITED FOR STORING HYDROGEN, BATTERIES PRODUCED THEREWITH, AND METHOD FOR THE PRODUCTION THEREOF USING THE PARTICLES
PARTICULES RENFERMANT UN NOYAU MÉTALLIQUE APPROPRIÉ À L'ACCUMULATION D'HYDROGÈNE, ENROBÉES D'UN POLYCONDENSAT D'(HÉTÉRO)ACIDE SILICIQUE ORGANO-MODIFIÉ, BATTERIES COMPORTANT CES PARTICULES ET PROCÉDÉ POUR LEUR PRODUCTION UTILISANT LESDITES PARTICULES

(30) Priorität: 30.06.2009 DE 102009030994; 11.08.2009 DE 102009036945
(43) Veröffentlichungstag der Anmeldung: 09.05.2012
(73) Patentinhaber: Fraunhofer-Gesellschaft zur Förderung der angewandten Forschung e.V., 80686 München (DE)
(72) Erfinder: POPALL, Michael, 97072 Würzburg (DE); OLSOWSKI, Birke-Elisabeth, 97209 Veitshöchheim (DE); COCHET, Sébastien, 97070 Würzburg (DE)
(74) Vertreter: Olgemöller, Luitgard Maria
(86) Internationale Anmeldenummer: PCT/EP2010/059207
(87) Internationale Veröffentlichungsnummer: WO 2011/000828

(56) Entgegenhaltungen:
- JP-A- 7 041 301
- JP-A- 10 241 678
- JP-B- 3 927 318
- US-A1- 2008 032 193

## Beschreibung

Die vorliegende Erfindung betrifft Pulver aus oder mit Partikeln, die einen metallischen, zur Wasserstoffspeicherung geeigneten Kern sowie eine diesen Kern vorzugsweise vollständig umhüllende Beschichtung aus oder mit einem organisch modifizierten (Hetero-)Kieselsäurepolykondensat aufweisen, wobei das organisch modifizierte (Hetero-)Kieselsäurepolykondensat organisch vernetzte gruppen aufweist. Die Erfindung betrifft ferner eine Elektrode, die das genannte Pulver, allein oder in Kombination/Mischung mit weiteren Bestandteilen, enthält oder daraus besteht, sowie eine Batterie, deren negative Elektrode wasserstoffspeichernde Metallpartikel in einer OH⁻-Ionen leitenden, gelförmigen Matrix enthält.

Im Zuge der "Green-Electronics" wurden Nickel-Metallhydrid-(NiMH)-Batterien als Ersatz von NiCd-Batterien entwickelt. Diese enthalten keine giftigen Schwermetalle mehr. Sie können bisher allerdings NiCd-Batterien nicht lückenlos ersetzen, da ihrer höheren Energiedichte eine geringere Zyklenfestigkeit und vor allem ein geringerer maximaler Lade- und Entladestrom gegenübersteht. Für Anwendungen mit hohem Energieverbrauch, wie z.B. schnurlose Power-Tools, Notstromaggregate und diverse mobile Anwendungen in der Medizintechnik etc. muss daher weiterhin auf NiCd-Batterien zurückgegriffen werden.

Die Negative Elektrode eines nach dem Prinzip einer NiMH-Batterie arbeitenden Akkumulators besteht aus einer Metalllegierung, die Wasserstoffatome in ihrem Kristallgitter speichern kann und häufig, aber nicht notwendigerweise, Nickel enthält und/oder die Zusammensetzung AB₅ oder AB₂ besitzt. Das Kristallgitter dieser Elektroden nimmt beim Ladevorgang Wasserstoff auf, so dass sich Metallhydrid bildet. Wird Energie abgerufen, diffundiert der Wasserstoff mehr oder weniger schnell aus dem Inneren des Elektrodenmaterials zur Oberfläche und reagiert dort mit OH⁻-Ionen des Elektrolyten (in der Regel etwa 20%ige KOH). Die Negative Elektrode ist dabei die geschwindigkeitsbestimmende Komponente solch einer wiederaufladbaren Batterie. Je größer die Oberfläche ist und je kürzer die Diffusionswege zur Oberfläche sind, desto schneller erfolgt die Energieabgabe und desto höher sind auch die entnehmbaren Ströme. Die Leistungsdichte der NiMH-Batterie hängt somit von der vorhandenen Oberfläche ab.

Die geometrische Oberfläche der Elektrode lässt sich beispielsweise durch noch dünnere Elektroden vergrößern. Effektiver ist es allerdings, die Partikelgröße des Metallpulvers zu verringern, denn auf diese Weise lässt sich das Oberfläche/Volumen-Verhältnis weiter erhöhen. Die Partikelgröße bei handelsüblichen NiMH-Akkus liegt noch bei einigen zehn Mikrometern. Dank innovativer Mahltechniken können Partikeldurchmesser von nur wenigen Mikrometern realisiert werden, was die Oberfläche der Mischmetallpartikel deutlich erhöht. Verschiedene Verfahren können benutzt werden, um eine solche Verkleinerung der Partikelgröße zu realisieren. Zum Beispiel das Mechanomade^{®} Verfahren (MBN Nanomaterialia, Vascon di Carbonera (Italien), www.mbn.it), ein hochenergetisches Kugelmahlen, das in inerter oder reaktiver Atmosphäre durchgeführt werden kann, und zu Mikropartikeln führt. Zudem wird hier eine nanokristalline Struktur der Partikel erhalten, sodass deutlich mehr Wasserstoff pro Zeiteinheit abgegeben werden kann.

Ein anderes Verfahren ist das Mechanofusion^{®} Verfahren (Hosokawa Micron Ltd., Runcorn (UK), www.hosokawa.co.uk), das die Herstellung neuer Metalllegierungen durch mechanisch-chemische Reaktionen zwischen 2 (oder mehr) Materialien ermöglicht. Dieses Verfahren ermöglicht durch lokales Schmelzen der Mikropartikel die Verbesserung der Partikel-Eigenschaften.

Aufgrund der deutlich höheren Oberflächenenergie hat insbesondere feinkristallines Mischmetallpulver jedoch auch einen entscheidenden Nachteil: Es ist unter Lufteinwirkung hochentzündlich.

In JP 10241678 wird ein Wasserstoff-Speichermaterial aus einer Metalllegierung wie NaNi₅ offenbart, das in Form eines Pulvers aus sphärischen Partikeln vorliegt. Diese Teilchen sollen zur Ausformung einer Elektrode in ein unpolares Bindemittel wie PE, PVC oder PVDF eingearbeitet werden. Die sphärischen Partikel werden mit einem Kupplungsmittel umhüllt, das unter anderem vom Silan-Typ sein kann. Hierfür wird die Oberfläche des Elektrodenmaterials beispielsweise mit γ-Chlorpropyltrimethoxysilan behandelt. Durch diese Maßnahme soll die Adhäsion der Teilchen zu dem Bindemittel verbessert werden.

Aufgabe der vorliegenden Erfindung ist es, ein Wasserstoff-Speichermaterial in Pulverform bereitzustellen, bei dem die oben erwähnte, für die Herstellung von Batteriezellen problematische Reaktivität ausgeschaltet ist.

In Lösung dieser Aufgabe wird vorgeschlagen, das Metallpulver vor der Verarbeitung zunächst zu passivieren.

Als eine Art Korrosionsschutz soll die Passivierungsschicht verhindern, dass die Mischmetalllegierung während der Batterieproduktion oxidiert. Allerdings muss trotz dieser Passivierungsschicht die Oberfläche der Mischmetallpartikel für die Elektrolyte zugänglich sein, ohne dass dabei der Ionenzugang des Batterieelektrolyten zu den Partikeln negativ beeinflusst wird. Das sind zwei Bedingungen, die ein Material gleichzeitig eigentlich nicht erfüllen kann.

Völlig unerwartet konnte festgestellt werden, dass eine Passivierungsschicht auf den Pulver-Partikeln, z.B. Nickel-Mischmetall-Partikeln, sehr gut haftet und damit einerseits einen Schutz für diese gegenüber Umwelteinflüssen bis zum Zeitpunkt der Einarbeitung in das Anodenmaterial und des Cycelns der damit hergestellten (NiMH-)Batterie liefert, zum anderen aber den Wasserstoff- und sonstigen Ionenfluss zur und von der Anode in die übrigen Teile der Batterie nicht behindert, sondern sogar noch fördert, wenn diese Passivierungsschicht aus einem organisch modifizierten (Hetero-)Kieselsäurepolykondensat aufgebaut ist, das organisch vernetzte Gruppen aufweist. Denn es hat sich überraschenderweise herausgestellt, dass sich die anorganisch-organische Passivierungsschicht nach erfolgter Verarbeitung in der wässrigen, alkalischen Umgebung des Elektrolyten (wässriger KOH) verändert. Es bildet sich daraus nämlich durch Aufnahme von wässriger Elektrolytlösung ein in der Regel gelartiges Material, das den Durchtritt der für die Aktivität der Batterie erforderlichen Ionen nicht nur nicht behindert, sondern entgegen allen Erwartungen sogar erleichtert, nach Art einer Matrix die Partikel umhüllt und damit einen gelförmigen Elektrolyten darstellt. Dieses Elektrolyt-Gel/Medium ermöglicht hohe Entladegeschwindigkeiten, die für Hochleistungsanwendungen günstig sind.

Die Dicke der Passivierungsschicht ist aufgrund der Ionenleitfähigkeit der sich bildenden Matrix in der Regel nicht kritisch. Sie liegt meist unter 1 µm, stärker bevorzugt zwischen 25 und 500 nm und ganz besonders bevorzugt zwischen etwa 40 und 250 nm.

Das organisch modifizierte (Hetero-)Kieselsäurepolykondensat bildet eine anorganisch-organische Hybridpolymer-Schicht aus, die aus untereinander verbundenen Oligomeren / funktionalen anorganischen Clustern in einer Größenordnung von häufig 1 bis 10 nm aus hydrolysierten und kondensierten, organische Reste aufweisenden Silanen sowie gegebenenfalls weiteren in das anorganische Netzwerk einkondensierten Metallverbindungen sowie organischen Gruppen, die untereinander vernetzt sind, aufgebaut ist. Zur Herstellung dieser Schicht kann mit Hilfe der Sol-Gel-Chemie ein Beschichtungsmaterial aus entsprechenden monomeren oder oligomeren Ausgangsmaterialien synthetisiert werden, das nach Aufbringen auf die Partikel verfestigt/gehärtet wird. Dies kann durch Nachtrocknen geschehen, wobei sich meist weitere Si-O-Si- bzw. Si-O-Metall-Bindungen ausbilden, bis ein großflächiges Netzwerk entsteht. Zusätzlich oder alternativ kann dann, wenn die organischen Komponenten der Ausgangsmaterialien eine Polymerisationsreaktion eingehen können, ein organisches Netzwerk aufgebaut werden, derart, dass das anorganische Netzwerk aus Si-O-Si- oder Si-O-Metall-Bindungen von dem organischen Netzwerk überlagert bzw. durchdrungen wird. Es entstehen hochvernetzte, meist transparente Materialien, deren Eigenschaften über die Auswahl der anorganischen und organischen Strukturelemente in weiten Bereichen gezielt eingestellt werden können.

Dementsprechend stellt die Erfindung Partikel mit einem metallischen Kern bereit, der in der Lage ist, Wasserstoff zu speichern, und der mit einer Beschichtung aus einem organisch modifizierten (Hetero-) Kieselsäurepolykondensat versehen ist, das organisch vernetzte Gruppen aufweist. Die Partikel liegen in der Regel in Form eines bevorzugt schüttfähigen Pulvers vor.

Zu den für die Erfindung geeigneten metallischen Materialien zählen Nickel und alle Nickel-Legierungen, die Wasserstoff speichern können. Auch zählen dazu Metalle wie Lanthan, die Lanthaniden, Mangan, Cer, Cobalt, Neodym und/oder Silicium in jeweils geeigneter Form (Legierung), soweit sie in der Lage sind, Wasserstoff im Kristallgitter zu speichern. Weiterhin zählen dazu Legierungen des Typs AB₅, wobei A vorzugsweise ausgewählt ist unter den Elementen der Seltenen Erden (Lanthaniden) Ce, Pr, Nd, Pm, Sm, Eu, Gd, Tb, Dy, Ho, Er, Tm, Yb und Lu, ggf. in Mischung mit anderen Metallen, wie sie in der Natur vorkommen, beispielsweise Si, und vorzugsweise in einer Mischung, die ein oder zwei der Metalle La, Ce und Ti oder alle diese drei Metalle enthält, während B ausgewählt ist unter Ni, Co, Mn und Al. Lanthanhaltige oder nickelhaltige Materialien sowie Lanthan und Nickel enthaltende Legierungen dieses Typs sind besonders bevorzugt, beispielsweise LaNi₅, LaNi_{3,9}Co_{0,4}Al_{0,4}Mn_{0,3}, LaNi_{3,6}Co_{0,7}Al_{0,4}Mn_{0,3} (Standard AB₅ Materialien von Varta) oder La_{0,8}Nd_{0,2}Ni_{2,5}Co_{2,4}Si_{0,1}. Auch Legierungen des Typs AB₂ sind für die Erfindung geeignet. Solche Materialien dienen als Basis für Multikomponenten-Legierungen. A ist bei diesem Typ ausgewählt unter Vanadium und Titan, B unter insbesondere Zr und Ni, aber auch unter Cr, Co, Mn und Fe sowie Mischungen beliebiger der genannten sechs Metalle, insbesondere Cr+Co+Mn+Fe. Es sollte aber klar sein, dass die Erfindung nicht auf diese teils relativ gängigen, teils selteneren Materialien beschränkt ist, sondern alle wasserstoffspeichernden Metalle, Mischmetalle bzw. Legierungen umfasst. Darunter fallen beispielsweise bisher für die vorgenannten NiMH-Batterien noch nicht genutzte, aber als Wasserstoffspeicher vielversprechende und teilweise für Dünnfilmzwecke bereits verwendete Legierungen wie Magnesiumlegierungen. Beispiele sind Legierungen des Typs MgX mit X = Sc, Ti, V oder Cr, die insbesondere in der Stöchiometrie Mg₄X verwendbar sind. Geeignet sind aber auch andere Legierungen, in denen ein hoher Anteil von Magnesium (vorzugsweise mindestens 80 Atom-%) mit einer Mehrzahl weiterer Hauptgruppen- und/oder Übergangsmetalle legiert ist, vorzugsweise ausgewählt unter Al, Ni und Mn (Beispiel: Mg₈₇Al₇Ni₃Mn₃). Die Teilchen besitzen unzerkleinert in der Regel Durchmesser von durchschnittlich einigen zehn µm, häufig 5 bis 50 µm; eine verbesserte Wirkung lässt sich wie oben erwähnt mit kleineren Partikeln erzielen. Mit den oben angegebenen Verfahren, z.B. dem Mechanomade^{®}-Verfahren, lassen sich Teilchen in der Größenordnung von hinunter bis zu 10 µm, manchmal sogar bis zu 1 bis 2 µm oder noch kleiner erhalten. Diese werden nachfolgend auch als "Nanopartikel" bezeichnet. Es handelt sich bei ihnen häufig um Agglomerate, wie sich aus der gemessenen Kristallitgröße von ca. 50 nm ergibt; mit bekannten Techniken lassen sich aus den Agglomeraten Partikel mit noch einmal kleineren Durchmessern bereitstellen, die natürlich ebenfalls für die Erfindung geeignet sind.

Anorganisch-organische Hybridpolymere auf der Basis eines Si-O-Si-Netzwerks sind in großer Zahl bekannt. Eine große Gruppe stellen die ORMOCER^{®}e dar, die am Fraunhofer-Institut für Silicatforschung entwickelt wurden. Sie lassen sich auch als Organopolysiloxane oder hydrolytische Kondensate von (Halb-)Metallverbindungen, insbesondere Siliciumverbindungen, definieren, die durch am (Halb-)Metallatom gebundene organische Reste (organisch polymerisierbar/polymerisiert oder nicht polymerisierbar) modifiziert sind. Neben Siliciumverbindungen können andere hydrolysierbare/ hydrolysierte Metallverbindungen, z.B. des Aluminiums, Bors, Germaniums etc. vorhanden sein.

Die Herstellung von organisch modifizierten Polysiloxanen oder (Hetero-)Kieselsäurekondensaten (häufig auch als "Silanharze" bezeichnet) und deren Eigenschaften ist in einer Fülle von Publikationen beschrieben worden. Stellvertretend sei hier z.B. auf Hybrid Organic-Inorganic Materials, MRS Bulletin 26(5), 364ff (2001) verwiesen. Ganz allgemein werden solche Substanzen in der Regel mit Hilfe des sogenannten Sol-Gel-Verfahrens hergestellt, worin hydrolyseempfindliche, monomere oder prekondensierte Silane, ggf. in Gegenwart weiterer cokondensierbarer Substanzen wie Alkoxiden des Bor, Germanium, Zirkonium oder Titan, sowie ggf. von zusätzlichen Verbindungen, die als Modifikatoren oder Netzwerkwandler dienen können, oder von sonstigen Additiven wie Farb- und Füllstoffen, einer Hydrolyse und Kondensation unterworfen werden. Die Halbmetall- oder Metall-Kationen (M) der co-kondensierbaren Substanzen werden als Heteroatome in das Si-O-Si-Gerüst eingebaut, so dass Si-O-Mund M-O-M-Bindungen entstehen können.

Das Beschichtungsmaterial für die erfindungsgemäßen Partikel wird vorzugsweise hergestellt aus oder unter Verwendung mindestens eines Silans der Formel (I)

RₐR'_{b}SiX_{4-a-b} (I)

worin die Substituenten R, R' und X jeweils gleich oder verschieden sein können und worin R einen über Kohlenstoff am Silicium gebundenen, organisch vernetzbaren oder, in selteneren Fällen, bereits mit einem oder mehr weiteren solchen Rest(en) R verknüpften Rest darstellt, R' einen über Kohlenstoff am Silicium gebundenen, organisch nicht vernetzbaren Rest darstellt, X eine unter Hydrolysebedingungen hydrolysierbare oder vom Silicium abspaltbare Gruppe oder OH ist, a 1 oder 2 ist, b 0 oder 1 ist und a+b 1 oder 2 sein kann.

Die (meist spätere) Vernetzung des Restes R kann über eine bzw. verschiedene Gruppen erfolgen. Unter "Polymerisation" soll dabei zum einen eine Polyreaktion verstanden werden, bei der reaktionsfähige Doppelbindungen oder Ringe, meist unter dem Einfluss von Wärme, Licht oder ionisierender Strahlung, in Polymere übergehen (engl.: addition polymerization oder chain-growth polymerization). Beispiele für R sind daher Reste mit einer oder mehreren nichtaromatischen C=C-Doppelbindungen, vorzugsweise einer Michaeladdition zugänglichen Doppelbindungen, wie Styryle oder (Meth)Acrylate. Beispielsweise kann eine kationische Polymerisation erfolgen, z.B. mit einem Epoxysystem (siehe z.B. C.G. Roffey, Photogeneration of Reactive Species for UV Curing, John Wiley & Sons Ltd, (1997)). Alternativ kann die Vernetzung durch andere Polyreaktionen wie ringöffnende Polymerisation erfolgen. In spezifischen Ausführungsformen kann diese Polyreaktion direkt, z.B. zwischen einem epoxidhaltigen Rest R an einem ersten Silan der Formel (I) und einem aminhaltigen Rest R an einem zweiten Silan der Formel (I), erfolgen. Der Rest R enthält in der Regel mindestens zwei und vorzugsweise bis zu ca. 50 Kohlenstoffatome. Die organisch vernetzbare Gruppe kann dabei direkt oder über eine Kupplungsgruppe an das Kohlenstoffskelett des Restes R gebunden sein, das seinerseits geradkettig oder verzweigtkettig vorliegen kann. Dementsprechend kann die Kohlenstoffkette des Restes R ggf. durch O, S, NH, CONH, COO, NHCOO, NHCONH oder dgl. unterbrochen sein. Beispiele für R sind Acryloxy-, Methacryloxy- Glycidyloxy-, Allyl-, Vinyl-, Styryl- oder Epoxycyclohexyl-C₁-C₄-alkylenreste, oder Reste, die zwei oder mehr Arylat- und/oder Methacrylatgruppen enthalten wie (Meth-)Acrylsäureester von Trimethylolpropan, Pentaerythrit, Dipentaerythrit, C₂-C₆-Alkandiolen, Polyethylenglykolen, Polypropylenglykolen oder gegebenenfalls substituiertem und/oder alkoxyliertem Bisphenol A, die gegebenenfalls über z. B. eine -NHCO- oder -NHCONH-Gruppe an eine am Silicium gebundene Alkylengruppe gebunden sind.

Hervorzuheben als gut geeignet für die Erfindung sind Reste R, die eine oder mehrere Acrylat- und/oder Methacrylatgruppen oder Ringe wie Epoxy- oder Epoxycyclohexylringe enthalten. Als Beispiel für Silane, deren Rest R bereits vernetzt sein kann, seien Isocyanate genannt, die bereits zu Isocyanuraten trimerisiert sind. Diese sind diskrete Moleküle, die drei hydrolytisch kondensierbare Silylreste aufweisen. Der Rest R' ist einer solchen Reaktion nicht fähig. Vorzugsweise handelt es sich dabei um eine ggf. substituierte Alkyl-, Aryl-, Alkylaryl- oder Arylalkylgruppe, deren Substituenten eine Vernetzung nicht zulassen, wobei die Kohlenstoffkette dieser Reste ggf. durch O, S, NH, CONH, COO, NHCOO, NHCONH oder dgl. unterbrochen sein kann. Bevorzugt sind nicht unterbrochene Reste R' mit 1 bis 30 oder auch bis 50, stärker bevorzugt 1 bis 5 Kohlenstoffatomen. Die Kohlenstoffatome des Restes R' können substituiert oder unsubstituiert sein.

Die Gruppe X in Formel (I) ist eine unter Hydrolysebedingungen hydrolysierbare bzw. vom Silicium abspaltbare Gruppe oder OH. Welche Gruppen hierfür geeignet sind, ist dem Fachmann aus dem Stand der Technik bekannt. In der Regel ist die Gruppe X Halogen, Hydroxy, Alkoxy, Acyloxy oder NR"₂ mit R" gleich Wasserstoff oder Niederalkyl (vorzugsweise mit 1 bis 6 Kohlenstoffatomen). X kann in manchen Fällen auch Wasserstoff bedeuten; in der Regel ist dies jedoch nicht gewünscht, da die SiH-Gruppe direkt an organische Bestandteile des Systems, z.B. Doppelbindungen, anbinden kann und damit die organische Vernetzung des Systems beeinflusst, während die Reste X in der vorliegenden Erfindung bevorzugt als Abgangsgruppen bzw. Reaktionspartner (im Falle von OH) bei der hydrolytischen Kondensation der Systeme vorgesehen sind. Alkoxygruppen sind als abspaltbare Gruppen bevorzugt, insbesondere Niederalkoxygruppen wie C₁-C₆-Alkoxy.

Da der Index b 0 sein kann, kann das Silan der Formel I einen Rest R in Kombination mit keinem oder einem Rest R' oder zwei Reste R in Kombination mit keinem oder einem Rest R' aufweisen. In den meisten Fällen ist es bevorzugt, mindestens ein Silan der Formel (I) mit nur einem Rest R einzusetzen; noch stärker bevorzugt enthält dieses Silan keinen Rest R'.

Das Beschichtungsmaterial kann unter Verwendung mindestens eines weiteren Silans der Formel (II)

R'ₐSiX₄₋ₐ (II)

erzeugt werden, worin R' und X jeweils gleich oder verschieden sind und die gleiche Bedeutung wie in Formel (I) besitzen und a 0, 1, 2, 3 oder 4 sein kann. Durch Zugabe solcher Silane mit a = 0 oder 1 zu der zu hydrolysierenden und kondensierenden Mischung wird der SiO-Anteil des Harzes, also der anorganische Anteil, erhöht. In der Formel (II) ist a = 0 oder 1 bevorzugt. Beispiele für derartige Verbindungen sind Tetraethoxysilan und Methyltrimethoxysilan oder Methyltriethoxysilan.

Stattdessen oder gegebenenfalls zusätzlich kann das erfindungsgemäß einsetzbare Beschichtungsmaterial unter Verwendung mindestens eines Silans mit der Formel (III)

RₐR'₃₋ₐSiX (III)

hergestellt werden, worin R, R' und X die voranstehend für Formel (I) angegebene Bedeutung haben und a 1, 2 oder 3 sein kann. Dadurch wird der organische Anteil des Materials erhöht.

Das für die Erfindung geeignete Beschichtungsmaterial kann weitere Substanzen enthalten, z.B. organische Verbindungen von Metallen der III. Hauptgruppe, von Germanium und von Metallen der II., III., IV., V., VI., VII. und VIII. Nebengruppe. Bei diesen Verbindungen handelt es sich vorzugsweise um Komplexe oder chelatisierte Verbindungen, vorzugsweise um niedere (insbesondere C₁-C₆-)Metallalkoxide. Ein weiteres Beispiel sind organische Verbindungen, die als Modifikatoren oder als Quervernetzer dienen können (im letzteren Fall enthalten sie vorzugsweise zwei Reste, die jeweils mit einem Rest R des Silans der Formeln (I) und/oder (III) eine Polyreaktion eingehen können).

In einer spezifischen Ausführungsform der Erfindung wird das Beschichtungsmaterial aus oder unter Verwendung mindestens eines Silans der Formel (I), in welchem X nicht Hydroxy und vorzugsweise Alkoxy bedeutet und in welchem a+b vorzugsweise gleich 1 ist, gegebenenfalls unter Verwendung mindestens eines weiteren Silans der Formel (II) oder (III) und/oder einer Metallverbindung wie voranstehend ausgeführt, zusammen mit einem Silandiol der Formel (IV)

R"₂Si(OH)₂ (IV)

hergestellt, worin der Rest R" gleich oder verschieden ist und eine substituierte oder unsubstituierte Alkylgruppe mit vorzugsweise 1-12 Kohlenstoffatomen ist oder dieselbe Bedeutung wie R hat.

In einer anderen spezifischen Ausführungsform der Erfindung können die Silane der Formel (I) durch die nachstehende Formel (V) beschrieben werden

{XₐR_{b}Si[R'(A)_{c}]_{4-a-b}}ₓB (V)

mit
X = Halogen, Hydroxy, Alkoxy, Acyloxy, Alkylcarbonyl, Alkoxycarbonyl oder NR", bevorzugt (C₁-C₄) Alkoxy oder Halogen, z.B. Chlor,
R = Alkyl, Alkenyl, Aryl, Alkylaryl oder Arylalkyl, insbesondere (C₁-C₄) Alkyl
A = O, S, PR", POR", NHC(O)O oder NHC(O)NR", insbesondere O oder S,
B = geradkettiger oder verzweigter organischer Rest, der mindestens eine (für c=1 und
A = NHC(O)O oder NHC(O)NR") bzw. mindestens zwei C=C-Doppelbindungen und 5 bis 50 Kohlenstoffatome enthält,
R" = Wasserstoff, Alkyl oder Aryl,
a = 1, 2 oder 3,
b = 0, 1 oder 2,
c = 0 oder 1 und
x = eine ganze Zahl, deren Maximum vorzugsweise der Anzahl von Doppelbindungen im Rest B minus 1 entspricht oder, für c = 1 und A = NHC(O)O oder NHC(O) NR", der Anzahl von Doppelbindungen im Rest B entspricht, vorzugsweise = 1 oder 2. Ganz besonders bevorzugt enthält der Rest B mindestens eine oder mindestens 2 C=C-Doppelbindungen, z.B. Acryl- und /oder Methacrylgruppen.

Für die vorliegende Erfindung geeignete Beschichtungsmaterialien sind unter anderem beispielsweise die in EP 451709 A2, EP 644908 B1, EP 1196478 B1 oder EP 1453886 B1 beschriebenen Harze/Kondensate.

Das Beschichtungsmaterial wird in der Regel mit Hilfe des sogenannten Sol-Gel-Prozesses aus den monomeren oder oligomeren Metallverbindungen, insbesondere den jeweiligen Silanen, erzeugt. Bei diesem Prozess erfolgt die Ausbildung anorganischer Vernetzungsstrukturen; es bilden sich - meist nach Initiierung der Hydrolyse - die gewünschten, anorganisch (teil-)kondensierten Produkte. Der Sol-Gel-Schritt erfolgt in der Regel in einem geeigneten Lösungsmittel. Dabei erhält man ein Harz, dessen Viskosität durch den Vernetzungsgrad gesteuert werden kann. Dieses kann z.B. zum Herabsetzen der Viskosität gegebenenfalls noch weiter verdünnt werden.

Beschichtungsmaterialien mit nicht mehr als 5 Masse-% Feststoff im Lösungsmittel haben sich für die Zwecke der vorliegenden Erfindung als gut geeignet erwiesen, um befriedigend dichte Umhüllungen um die Partikel zu erhalten. Niedrigere Konzentrationen, z.B. im Bereich von etwa 0,8 bis 4, insbesondere von 2,5 bis 4 Masse-%, sind noch günstiger. Sinkt die Konzentration auf unter 0,5 Masse-%, kann nicht mehr in allen Fällen sichergestellt werden, dass die Beschichtung ausreichend dicht auf die Partikel aufgebracht werden kann, um eine Entzündung oder andere Schädigung zu vermeiden. Über das Gewicht der Feststoffmasse im Beschichtungsmaterial relativ zu demjenigen der zu umhüllenden Partikel kann die Beschichtungsdicke gesteuert werden; sie kann in günstiger Weise ca. 0,5 bis 10, insbesondere 0,5 bis 5 % des Gewichts der zu umhüllenden Partikel ausmachen, stärker bevorzugt 0,8 bis 2 %.

Die Wahl des Lösungsmittels ist nicht kritisch. In der Regel ist es günstig, als Lösungsmittel für den Beschichtungsvorgang zumindest teilweise dasjenige beizubehalten, das für die Herstellung des entsprechenden Beschichtungsmaterials verwendet wurde.

Die Beschichtung selbst sollte unter Inertgas erfolgen, vorzugsweise unter Argon, da sowohl die nickelhaltigen als auch die nickelfreien Metallteilchen bis zu ihrer vollständigen Passivierung weder Sauerstoff noch Feuchtigkeit ausgesetzt werden sollten.

Nach dem Auftrag des Beschichtungsmaterials auf die Partikel wird der größte Teil des Lösungsmittels entfernt. Dies erfolgt vorzugsweise durch vorsichtiges Abrotieren des Lösungsmittels am Rotationsverdampfer bei milden Temperaturen (ca. 40-70°C). Mit dieser Maßnahme kann in der Regel bereits die vollständige Trocknung/Aushärtung der Beschichtung bewirkt werden. Denn neben Trocknungseffekten durch das Abziehen von Lösungsmittel, die zu einer weitergehenden anorganischen Vernetzung beitragen können, hat die metallische Oberfläche der beschichteten Partikel die Wirkung eines Katalysators für die Vernetzung insbesondere auch von organisch vernetzbaren Gruppen des Harzes, so dass es in der Regel nicht erforderlich ist, zusätzliche Energie in Form von stärkerer Erhitzung oder von Strahlung bereitzustellen und/oder dem Beschichtungsmaterial Initiatoren oder Katalysatoren zuzusetzen, um eine organische Vernetzung der Reste R in den Silanen der Formel (I) zu bewirken.

Die passivierende Wirkung der erfindungsgemäßen Beschichtung lässt sich durch thermogravimetrischen Messungen nachweisen. Demnach werden vermahlene, aber unbeschichtete Pulverproben bereits bei 130°C thermisch instabil und entzünden sich, während sie mit einer erfindungsgemäßen Beschichtung versehen bis mindestens ca. 230°C stabil sind. Dementsprechend wird die Verarbeitung der feinkristallinen Elektrodenmaterialien erheblich vereinfacht, wenn diese erfindungsgemäß beschichtet sind.

In Sauerstoffatmosphäre findet eine exotherme Reaktion entsprechend der Selbstentzündung des pyrophoren Materials statt. Die Entzündung ist korreliert mit einer Gewichtszunahme entsprechend der Oxidation von im wesentlichen Nickel zu NiOₓ.

Bei wiederaufladbaren Batterien spielt die sogenannte C-Rate eine entscheidende Rolle für die Qualität der elektrochemischen Eigenschaften. Sie gibt die Größe der Lade- und Entladeströme unabhängig von der Kapazität der verschiedenen Zellen an. An mit Hochleistungselektroden ausgestatteten Testzellen mit erfindungsgemäß beschichtetem Elektrodenmaterial konnte ein im Vergleich zu herkömmlichen Elektrodenmaterialien auch bei hoher C-Rate - also bei schnellen Entladevorgängen-hohe Entladeladung nachgewiesen werden. Dabei lag die Geschwindigkeit der Leistungsabgabe sogar über der von unbeschichteten Mikropartikeln.

Nachstehend soll die Erfindung anhand von Beispielen näher erläutert werden.

### Beispiel 1

In einen 1 l Kolben werden 248 g (1 mol) Methacryloxypropyltrimethoxysilan und 355 g Diethylcarbonat eingewogen. 0,37 g (10 mmol) Ammoniumfluorid und 27 g (1,5 mol) destilliertes Wasser werden hinzugefügt und gerührt. Das entstehende Lösungsmittel wird nach einigen Tagen (10 bis 20) bei 40°C bis 100 mbar abrotiert. Das Material ist zähflüssig und gelblich.

### Beispiel 2

In einen 1 l Kolben werden 236 g (1 mol) 3-Glycidoxypropyl-trimethoxysilan mit 355 g Diethylcarbonat eingewogen. 0,37 g (10 mmol) Ammoniumfluorid und 27 g (1,5 mol) destilliertes Wasser werden hinzugefügt. Die Mischung wird gerührt. Das entstehende Lösungsmittel wird nach einigen Tagen (10 bis 20) bei 40°C bis 100 mbar abrotiert. Das Material ist gelblich und fest.

### Beispiel 3:

In einen 1 l Kolben werden 246 g (1 mol) 2-(3,4-Epoxycyclohexyl)ethyltrimethoxysilan mit 355 g Diethylcarbonat eingewogen. 0,37 g (10 mmol) Ammoniumfluorid und 27 g (1,5 mol) destilliertes Wasser werden hinzugefügt. Die Mischung wird gerührt. Das entstehende Lösungsmittel wird nach einigen Tagen (10 bis 20) bei 40°C bis 100 mbar abrotiert. Das Material ist gelblich und zähflüssig.

### Beispiel 4:

In einen 250 ml Kolben werden 24,6 g (0,04 mol) Tris(3-trimethoxysilyl)propylisocyanurat, 70 g (0,2 mol) Polyethylenglycol-monomethylether 350 und 0,48 g Natrium-Methylatlösung 30% ig in Methanol in dieser Reihenfolge eingewogen, gerührt und bei 50°C und 200 mbar bis zur Gewichtskonstanz langsam abrotiert.

### Beispiel 5:

### Methode zum Beschichtung der Partikel und resultierende Eigenschaften

Als NiMH-Pulver wird das Standard AB₅ Varta Material unvermahlen bzw. nach dem Mechanomade® vermahlen eingesetzt.

In einen 100 ml Kolben werden 20,4 g NiMH unter Argon eingewogen. 0,500 g Beschichtungsmaterial nach Beispiel 2 in Diethylcarbonat (≈0,17 g Lackmaterial ohne Lösungsmittel) und 7 g Propylacetat werden hinzugewogen. Der Kolben wird am mit Argon gespülten Rotationsverdampfer langsam bewegt. Nach ca. 30 Minuten wird bei 40°C mit dem Abrotieren begonnen bis 20 mbar, anschließend wird die Temperatur auf 60 °C erhöht und 1 Stunde unter diesen Bedingungen abrotiert.

Das thermische Verhalten der vermahlenen Partikel vor und nach dem Aufbringen der Beschichtung ergibt sich wie folgt: Während unbehandelte Pulverproben schon bei Temperaturen von 130 °C thermisch instabil werden und sich entzünden, ist das mit der erfindungsgemäßen Beschichtung passivierte Pulver bis mindestens 230 °C stabil.

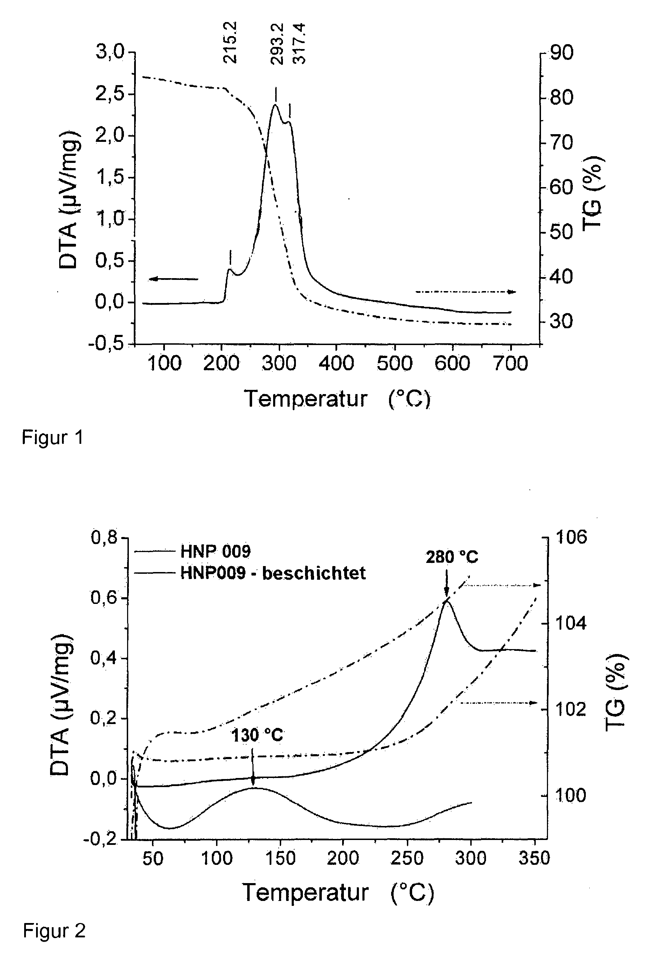

**Figur 1** zeigt das thermische Verhalten des Beschichtungsmaterials gemäß Beispiel 2. In **Figur 2** ist die TG/DTA-Analyse des vermahlenen NiMH-Pulvers gezeigt, und zwar einmal für das unbeschichtete Pulver und zum anderen für dasselbe Pulver, das mit der Beschichtung gemäß Beispiel 2 versehen war.

Demzufolge findet man für das unbeschichtete Material einen exothermen Peak bei 130 °C, gekoppelt mit einer beginnenden Gewichtszunahme, während das beschichtete Material erst ab 230 °C eine beginnende Gewichtsabnahme zeigt. Diese ist zunächst gemäß **Figur 1** auf eine beginnende Zersetzung der Passivierungsschicht zurückzuführen. Die exotherme Reaktion des Metalls findet sich bei 280 °C, wie sich **Figur 2** entnehmen lässt.

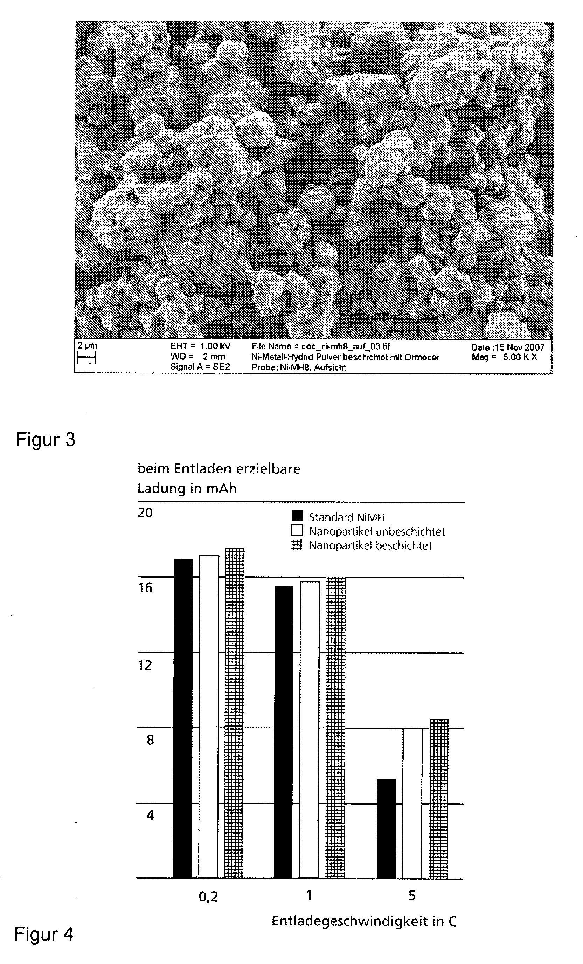

Eine rasterelektronenmikroskopische Aufnahme des Pulvers, dessen Thermogravimetrie in Figur 2 dargestellt ist, ist in **Figur 3** gezeigt.

### Beispiel 6: Elektrodenherstellung

Elektroden wurden durch Mischen des beschichteten NiMH-Pulvers gemäß Beispiel 5 mit Nickel-Pulver (10%) hergestellt. Von der homogene Mischung wurden Pillen verpresst (25 kN/cm²), die nach Einbinden in ein Nickelnetz zu negative Elektroden verpresst wurden (5 kN/cm²). Das Nickelnetz wird benutzt, um ein Lockern des Elektrodenpartikelverbundes während des Zyklisierens zu verhindern (Dehnung der Elektroden von 10-20% während des Lade/Entlade-Vorgangs).

Elektroden können auch durch andere Prozesse hergestellt werden, wie z. B. durch Sedimentation der nickel- oder sonstigen metallhydridhaltigen Partikel aus der Beschichtungslösung (ORMOCER^{®} mit Lösungsmittel) direkt auf eine Ni-Folie als Stromableiter. Anschließend wird durch Trocknung der Elektroden im Ofen (unter Schutzgas) die ORMOCER^{®} Beschichtung organisch polymerisiert, wobei die Partikeln passiviert werden.

Das verpresste Metallhydridpulver wurde anschließend in Standard V15H Knopfzellen (Varta) eingebaut und vermessen.

Gegenüber Standard-NiMH-Batterien konnte die Leistungsabgabe bei einer C-Rate von 5 C (Entladung in 1/5 Stunde = 12 Minuten) um mehr als 50 Prozent gesteigert werden. Damit liegt die Leistungsabgabe sogar über der von unbeschichteten Mikropartikeln. Die Leistungsfähigkeit der neuen reaktiven Materialien wird also durch die erfindungsgemäße Passivierung noch weiter erhöht. **Figur 4** zeigt den Vergleich zwischen NiMH-Testzellen mit Hochleistungselektroden mit gemäß Beispiel 5 beschichtetem, gemahlenem NiMH-Pulver und herkömmlichen Kathodenmaterialien, ebenfalls unter Verwendung von AB₅ Materialien.

## Patentansprüche

1. Pulver, bestehend aus Partikeln mit einem metallischen Kern, der in der Lage ist, Wasserstoff einzulagern oder der Wasserstoff in eingelagerter Form enthält, sowie mit einer Beschichtung aus einem organisch modifizierten (Hetero-)Kieselsäurepolykondensat, oder enthaltend diese Partikel, **dadurch gekennzeichnet, dass** das organisch modifizierte (Hetero)kieselsäurepolykondensat organisch vernetzte Gruppen aufweist.

2. Pulver nach Anspruch 1, worin der Kern der Partikel (a) Nickel oder (b) Nickel oder Magnesium jeweils in Kombination mit mindestens einem weiteren Metall aufweist, wobei das weitere Metall ausgewählt ist unter Aluminium, Lanthan und den Lanthaniden, Mangan, Cer, Eisen, Cobalt, Scandium, Titan, Zirkonium, Vanadium, Chrom, Mangan, und Silicium sowie unter Kombinationen zweier oder mehrerer dieser Metalle.

3. Pulver nach Anspruch 1 oder 2, worin der Kern der Partikel durchschnittlich einen Durchmesser von unter 15 µm, vorzugsweise von unter 5 µm, stärker bevorzugt von unter 500 nm und ganz besonders bevorzugt von unter 200 nm aufweist.

4. Pulver nach einem der voranstehenden Ansprüche, worin das organisch modifizierte (Hetero-)Kieselsäurepolykondensat hergestellt ist aus oder unter Verwendung mindestens eines Silans der Formel (I)
RₐR'_{b}SiX_{4-a-b} (I)
worin die Substituenten R, R' und X jeweils gleich oder verschieden sein können und worin R einen über Kohlenstoff am Silicium gebundenen, organisch vernetzbaren Rest darstellt, R' einen über Kohlenstoff am Silicium gebundenen, organisch nicht vernetzbaren Rest darstellt, X eine unter Hydrolysebedingungen hydrolysierbare oder vom Silicium abspaltbare Gruppe oder OH ist, a 1 oder 2 ist, b 0 oder 1 ist und a+b 1 oder 2 sein kann.

5. Pulver nach Anspruch 4, worin zumindest ein Teil der Reste R ausgewählt ist unter acrylat- und/oder methacrylathaltigen und/oder epoxygruppenhaltigen und/oder isocyanurathaltigen Resten.

6. Pulver nach einem der Ansprüche 4 oder 5, worin das organisch modifizierte (Hetero-)Kieselsäurepolykondensat hergestellt wurde unter Verwendung mindestens eines weiteren Silans der Formel (II)
R'ₐSiX₄₋ₐ (II)
worin R' und X jeweils gleich oder verschieden sind und die gleiche Bedeutung wie in Formel (I) besitzen und a 0, 1, 2, 3 oder 4, vorzugsweise 0 oder 1 bedeutet, und/oder unter Verwendung mindestens eines weiteren Silans mit der Formel (III)
RₐR'₃₋ₐSiX (III)
worin R, R' und X die in Anspruch 1 für Formel (I) angegebene Bedeutung haben und a 1, 2 oder 3 sein kann,
und/oder unter Verwendung mindestens einer organischen Verbindung eines Metalls der III. Hauptgruppe, von Germanium und/oder eines Metalls der II., III., IV., V., VI., VII. und VIII. Nebengruppe.

7. Pulver nach einem der Ansprüche 4 bis 6, worin das organisch modifizierte (Hetero- )Kieselsäurepolykondensat hergestellt wurde aus oder unter Verwendung mindestens eines Silans der Formel (I), worin X die Bedeutung Alkoxy hat und a+b gleich 1 ist, sowie mindestens eines Silandiols der Formel (IV)
R"₂Si(OH)₂ (IV)
worin der Rest R" gleich oder verschieden ist und eine substituierte oder unsubstituierte Alkylgruppe ist oder dieselbe Bedeutung wie R in der Formel (I) hat, gegebenenfalls unter Verwendung mindestens eines weiteren Silans der Formel (II) und/oder (III) und/oder einer Metallverbindung wie in Anspruch 6 definiert.

8. Pulver nach einem der Ansprüche 4 bis 7, worin das organisch modifizierte (Hetero- )Kieselsäurepolykondensat durch Aufbringen eines Beschichtungslacks und Vernetzen dieses Lacks erzeugt wurde, wobei der Lack mit Hilfe des Sol-Gel-Verfahrens hergestellt wurde.

9. Pulver nach einem der voranstehenden Ansprüche, das verpresst in Elektrodenform vorliegt.

10. NiMH-Batterie mit einer Negativen Elektrode, die Metallpartikel aufweist, welche Wasserstoff in eingelagerter Form enthalten bzw. in der Lage sind, Wasserstoff einzulagern, und in eine OH⁻-Ionen leitende, gelförmige Umhüllung oder Matrix eingebettet sind, die durch Einwirkung eines wässrigen, alkalischen Elektrolyten auf ein organisch modifiziertes (Hetero)Kieselsäurepolykondensat, das organisch vernetzte Gruppen aufweist, entstanden ist.

11. NiMH-Batterie nach Anspruch 10, worin das organisch modifizierte (Hetero)Kieselsäurepolykondensat, aus dem die Matrix entstanden ist, hergestellt wurde aus oder unter Verwendung mindestens eines Silans der Formel (I)
RₐR'_{b}SiX_{4-a-b} (I)
worin die Substituenten R, R' und X jeweils gleich oder verschieden sein können und worin R einen über Kohlenstoff am Silicium gebundenen, organisch vernetzbaren Rest darstellt, R' einen über Kohlenstoff am Silicium gebundenen, organisch nicht vernetzbaren Rest darstellt, X eine unter Hydrolysebedingungen hydrolysierbare oder vom Silicium abspaltbare Gruppe oder OH ist, a 1 oder 2 ist, b 0 oder 1 ist und a+b 1 oder 2 sein kann.

12. NiMH-Batterie nach Anspruch 11, worin das organisch modifizierte (Hetero)Kieselsäurepolykondensat, aus dem die Matrix entstanden ist, hergestellt wurde unter Verwendung mindestens eines weiteren Silans der Formel (II)
R'ₐSiX₄₋ₐ (II)
worin R' und X jeweils gleich oder verschieden sind und die gleiche Bedeutung wie in Formel (I) besitzen und a 0, 1, 2, 3 oder 4, vorzugsweise 0 oder 1 bedeutet, und/oder unter Verwendung mindestens eines weiteren Silans mit der Formel (III)
RₐR'₃₋ₐSiX (III)
worin R, R' und X die in Anspruch 1 für Formel (I) angegebene Bedeutung haben und a 1, 2 oder 3 sein kann,
und/oder unter Verwendung mindestens einer organischen Verbindung eines Metalls der III. Hauptgruppe, von Germanium und/oder eines Metalls der II., III., IV., V., VI., VII. und VIII. Nebengruppe.

13. NiMH-Batterie nach einem der Ansprüche 11 oder 12, worin das organisch modifizierte (Hetero-)Kieselsäurepolykondensat, aus dem die Matrix entstanden ist, hergestellt wurde unter Verwendung mindestens eines Silans der Formel (I), worin X die Bedeutung Alkoxy hat und a+b gleich 1 ist, sowie mindestens eines Silandiols der Formel (IV)
R"₂Si(OH)₂ (IV)
worin der Rest R" gleich oder verschieden ist und eine substituierte oder unsubstituierte Alkylgruppe ist oder dieselbe Bedeutung wie R in der Formel (I) hat, gegebenenfalls unter Verwendung mindestens eines weiteren Silans der Formel (II) und/oder (III) und/oder einer Metallverbindung wie in Anspruch 14 definiert.

14. Verfahren zum Herstellen einer NiMH-Batterie nach einem der Ansprüche 11 bis 13, umfassend die Schritte:
(a) Herstellen eines Beschichtungsmaterials durch hydrolytische Kondensation mindestens eines Silans der Formel (I)
RₐR'_{b}SiX_{4-a-b} (I)
worin die Substituenten R, R' und X jeweils gleich oder verschieden sein können und worin R einen über Kohlenstoff am Silicium gebundenen, organisch vernetzbaren oder vernetzten Rest darstellt, R' einen über Kohlenstoff am Silicium gebundenen, organisch nicht vernetzbaren Rest darstellt, X eine unter Hydrolysebedingungen hydrolysierbare oder vom Silicium abspaltbare Gruppe oder OH ist, a 1 oder 2 ist, b 0 oder 1 ist und a+b 1 oder 2 sein kann, in einem Lösungsmittel,
(b) Aufbringen dieses Beschichtungsmaterials auf Partikel mit einem metallischen Kern, der in der Lage ist, Wasserstoff einzulagern, oder Wasserstoff in eingelagerter Form enthält,
(c) Entfernen zumindest eines Teils des Lösungsmittels und Erhöhen der Temperatur der beschichteten Partikel auf 40-70 °C,
(d) Überführen der beschichteten Partikel in Elektrodenform, und
(e) Zusammenführen des gemäß Schritt (d) geformten Materials mit den weiteren Bestandteilen der NiMH-Batterie.

## Claims

1. Powder, consisting of particles with a metallic core capable of storing hydrogen or containing hydrogen in stored form, and with a coating made of an organically modified (hetero) silicic acid polycondensate, or containing these particles,
**characterized in that** the organically modified (hetero) silicic acid polycondensate comprises organically cross-linked groups.

2. Powder according to claim 1, wherein the core of the particles has (a) nickel or (b) nickel or magnesium, in each case combined with at least an additional metal, wherein the additional metal has been selected from among aluminum, lanthanum and the lanthanides, manganese, cerium, iron, cobalt, scandium, titanium, zirconium, vanadium, chrome, manganese and silicon as well as in combination with two or several of these metals.

3. Powder according to claim 1 or 2, wherein the core of the particles has an average diameter of less than 15 µm, preferably of less than 5 µm, more preferred of less than 500 nm and especially preferred of less than 200 nm.

4. Powder according to one of the preceding claims, wherein the organically modified (hetero) silicic acid polycondensate is made from, or using, at least one silane having the formula (I)
RₐR'_{b}SiX_{4-a-b} (I)
wherein the substituents R, R' and X can in each case be either the same or different and wherein R represents an organically cross-linkable group bound to silicon through carbon, R' represents an organically not cross-linkable group bound to silicon through carbon, X is a group that can be hydrolyzed under hydrolysis conditions or split off from silicon or is OH, a is 1 or 2, b is 0 or 1 and a+b can be 1 or 2.

5. Powder according to claim 4, wherein at least part of the groups R has been selected from among groups containing acrylate and/or methacrylate and/or epoxy and/or isocyanurate.

6. Powder according to one of the claims 4 or 5, wherein the organically modified (hetero) silicic acid polycondensate was made using at least one additional silane having the formula (II)
R'ₐSiX₄₋ₐ (II)
wherein R' and X are in each case the same or different and have the same meaning as in formula (I) and a means 0, 1, 2, 3 or 4, preferably 0 or 1,
and/or using at least one additional silane having the formula (III)
RₐR'₃₋ₐSiX (III)
wherein R, R' and X have the meaning given in claim 1 for formula (I) and a can be 1, 2 or 3, and/or using at least one organic compound of a metal of the III main group, of germanium and/or of a metal of the II, III, IV, V, VI, VII and VIII subgroup.

7. Powder according to one of the claims 4 to 6, wherein the organically modified (hetero) silicic acid polycondensate was made from or using at least one silane of formula (I), wherein X has the meaning of alkoxy and a+b equals 1, as well as at least one silanediol having the formula (IV)
R"₂Si(OH)₂ (IV)
wherein the group R" is the same or different and is a substituted or unsubstituted alkyl group or has the same meaning as R in formula (I), optionally by using one additional silane of formula (II) and/or (III) and/or a metal compound as defined in claim 6.

8. Powder according to one of the claims 4 to 7, wherein the organically modified (hetero) silicic acid polycondensate was prepared by applying a coating lacquer and cross linking the same, whereby this lacquer was produced with the aid of the sol-gel method.

9. Powder according to one of the preceding claims that is present compacted in electrode shape.

10. NiMH battery with a negative electrode having metal particles that contain hydrogen in stored form or are capable of storing hydrogen, and are embedded in a gel-shaped sheath or matrix that conducts OH⁻ ions, and that has been formed through the action of an aqueous, alkaline electrolyte on an organically modified (hetero) silicic acid polycondensate having organically cross-linked groups.

11. NiMH battery according to claim 10, wherein the organically modified (hetero) silicic acid polycondensate from which the matrix was formed has been prepared from or using at least one silane having the formula (I)
RₐR'_{b}SiX_{4-a-b} (I)
wherein the substituents R, R' and X can in each case be either the same or different and wherein R represents an organically cross-linkable group bound to silicon through carbon, R' represents an organically not cross-linkable group bound to silicon through carbon, X is a group that can be hydrolyzed under hydrolysis conditions or split off from silicon or is OH, a is 1 or 2, b is 0 or 1 and a+b can be 1 or 2.

12. NiMH battery according to claim 11, wherein the organically modified (hetero) silicic acid polycondensate from which the matrix was formed has been prepared using at least one additional silane having the formula (II)
R'ₐSiX₄₋ₐ (II)
wherein R' and X are in each case the same or different and have the same meaning as in formula (I) and a means 0, 1, 2, 3 or 4, preferably 0 or 1,
and/or using at least one additional silane having the formula (III)
RₐR'₃₋ₐSiX (III)
wherein R, R' and X have the meaning given in claim 1 for formula (I) and a can be 1, 2 or 3, and/or using at least one organic compound of a metal of the III main group, of germanium and/or of a metal of the II, III, IV, V, VI, VII and VIII subgroup.

13. NiMH battery according to one of the claims 11 or 12, wherein the organically modified (hetero) silicic acid polycondensate from which the matrix was formed has been prepared using at least one silane having the formula (I), wherein X has the meaning of alkoxy and a+b equals 1, as well as at least one silanediol having the formula (IV)
R"₂Si(OH)₂ (IV)
wherein the group R" is the same or different and is a substituted or unsubstituted alkyl group or has the same meaning as R in formula (I), optionally by using at least one additional silane having the formula (II) and/or (III) and/or a metal compound as defined in claim 14.

14. Method for producing an NiMH battery according to one of the claims 11 to 13, comprising the steps:
(a) Production of a coating material by means of hydrolytic condensation of at least one silane having the formula (I)
RₐR'_{b}SiX_{4-a-b} (I)
wherein the substituents R, R' and X can in each case be either the same or different and wherein R represents an organically cross-linkable or cross-linked group bound to silicon through carbon, R' represents an organically not cross-linkable group bound to silicon through carbon, X is a group that can be hydrolyzed under hydrolysis conditions or split off from silicon or is OH, a is 1 or 2, b is 0 or 1 and a+b can be 1 or 2, in a solvent,
(b) Application of this coating material on particles having a metal core capable of storing hydrogen or containing hydrogen in stored form,
(c) Removal of at least part of the solvent and increasing the temperature of the coated particles to 40-70°C,
(d) Conversion of the coated particles into an electrode shape, and
(e) Joining the material formed according to step (d) with the additional components of the NiMH battery.

## Revendications

1. Poudre, composée de particules renfermant un noyau métallique, qui est approprié pour accumuler de l'hydrogène ou qui contient de l'hydrogène sous forme accumulée, et présentant aussi un revêtement formé d'un polycondensat d'(hétéro)acide silicique organo-modifié, ou contenant ces particules, **caractérisée en ce que** le polycondensat d'(hétéro)acide silicique organo-modifié présente des groupes organiquement réticulés.

2. Poudre selon la revendication 1, dans laquelle le noyau des particules présente (a) du nickel ou (b) du nickel ou du magnésium respectivement en combinaison avec au moins un autre métal, dans laquelle l'autre métal est sélectionné parmi l'aluminium, le lanthane et les lanthanides, le manganèse, le cérium, le fer, le cobalt, le scandium, le titane, le zirconium, le vanadium, le chrome, le manganèse, et le silicium ainsi que parmi des combinaisons de deux ou plusieurs de ces métaux.

3. Poudre selon la revendication 1 ou 2, dans laquelle le noyau des particules présente en moyenne un diamètre de moins de 15 µm, de préférence de moins de 5 µm, de préférence encore de moins de 500 nm et de préférence particulière encore de moins de 200 nm.

4. Poudre selon l'une quelconque des revendications précédentes, dans laquelle le polycondensat d'(hétéro)acide silicique organo-modifié est produit à partir de ou par utilisation d'au moins un silane de la formule (I)
RₐR'_{b}SiX_{4-a-b} (I)
dans laquelle les substituants R, R' et X peuvent être respectivement identiques ou différents et dans laquelle R représente un radical organiquement réticulable lié au silicium par un carbone, R' représente un radical non réticulable organiquement lié au silicium par un carbone, X est un groupe hydrolysable dans des conditions d'hydrolyse ou séparable du silicium ou OH, a est 1 ou 2, b est 0 ou 1 et a+b peut être 1 ou 2.

5. Poudre selon la revendication 4, dans laquelle au moins une partie des radicaux sont sélectionnés parmi des radicaux R contenant des acrylates et/ou méthacrylates et/ou contenant des groupes époxy et/ou contenant des isocyanurates.

6. Poudre selon l'une des revendications 4 ou 5, dans laquelle le polycondensat d'(hétéro)acide silicique organo-modifié a été produit par utilisation d'au moins un autre silane de la formule (II)
R'ₐSiX₄₋ₐ (II)
dans laquelle R' et X sont respectivement identiques ou différents et ont la même signification que dans la formule (I) et a représente 0, 1, 2, 3 ou 4, de préférence 0 ou 1, et/ou par utilisation d'au moins un autre silane de la formule (III)
RₐR'₃₋SiX (III)
dans laquelle R, R' et X ont la signification indiquée dans la revendication 1 pour la formule (I) et a peut être 1, 2 ou 3,
et/ou par utilisation d'au moins un composé organique d'un métal du groupe principal III, de germanium et/ou d'un métal du sous-groupe II, III, IV, V, VI, VII et VIII.

7. Poudre selon l'une quelconque des revendications 4 à 6, dans laquelle le polycondensat d'(hétéro)acide silicique organo-modifié a été produit à partir de ou par utilisation d'au moins un silane de la formule (I), dans laquelle X représente un alcoxy et a+b égale 1, ainsi que d'au moins un silanediol de la formule (IV)
R"₂Si(OH)₂ (IV)
dans laquelle le radical R" est identique ou différent et représente un groupe alkyle substitué ou non substitué ou a la même signification que R dans la formule (I), le cas échéant par utilisation d'au moins un autre silane de la formule (II) et/ou (III) et/ou d'un composé métallique tel que défini dans la revendication 6.

8. Poudre selon l'une quelconque des revendications 4 à 7, dans laquelle le polycondensat d'(hétéro)acide silicique organo-modifié a été produit par dépôt d'une laque de revêtement et réticulation de cette laque, dans laquelle la laque a été produite à l'aide d'un procédé sol-gel.

9. Poudre selon l'une quelconque des revendications précédentes, qui se présente à l'état pressé en forme d'électrode.

10. Batterie Ni/MH comportant une électrode négative, qui présente des particules métalliques, qui contiennent de l'hydrogène sous forme accumulée ou qui sont appropriées pour accumuler de l'hydrogène, et qui sont enrobées dans une enveloppe ou une matrice géliforme conductrice des ions OH⁻, qui s'est formée par l'action d'un électrolyte alcalin aqueux sur un polycondensat d'(hétéro)acide silicique organo-modifié, qui présente des groupes organiquement réticulés.

11. Batterie Ni/MH selon la revendication 10, dans laquelle le polycondensat d'(hétéro)acide silicique organo-modifié, à partir duquel la matrice s'est formée, a été produit à partir de ou par utilisation d'au moins un silane de la formule (I)
RₐR'_{b}SiX_{4-a-b} (I)
dans laquelle les substituants R, R' et X peuvent être respectivement identiques ou différents et dans laquelle R représente un radical organiquement réticulable lié au silicium par un carbone, R' représente un radical non réticulable organiquement lié au silicium par un carbone, X est un groupe hydrolysable dans des conditions d'hydrolyse ou séparable du silicium ou OH, a est 1 ou 2, b est 0 ou 1 et a+b peut être 1 ou 2.

12. Batterie Ni/MH selon la revendication 11, dans laquelle le polycondensat d'(hétéro)acide silicique organo-modifié, à partir duquel la matrice s'est formée, a été produit par utilisation d'au moins un autre silane de la formule (II)
R'ₐSiX₄₋ₐ (II)
dans laquelle R' et X sont respectivement identiques ou différents et ont la même signification que dans la formule (I) et a représente 0, 1, 2, 3 ou 4, de préférence 0 ou 1, et/ou par utilisation d'au moins un autre silane de la formule (III)
RₐR'₃₋ₐSiX (III)
dans laquelle R, R' et X ont la signification indiquée dans la revendication 1 pour la formule (I) et a peut être 1, 2 ou 3,
et/ou par utilisation d'au moins un composé organique d'un métal du groupe principal III, de germanium et/ou d'un métal du sous-groupe II, III, IV, V, VI, VII et VIII.

13. Batterie Ni/MH selon l'une des revendications 11 ou 12, dans laquelle le polycondensat d'(hétéro)acide silicique organo-modifié, à partir duquel la matrice s'est formée, a été produit par utilisation d'au moins un silane de la formule (I), dans laquelle X représente un alcoxy et a+b égale 1, ainsi que d'au moins un silanediol de la formule (IV)
R"₂Si(OH)₂ (IV)
dans laquelle le radical R" est identique ou différent et représente un groupe alkyle substitué ou non substitué ou a la même signification que R dans la formule (I), le cas échéant par utilisation d'au moins un autre silane de la formule (II) et/ou (III) et/ou d'un composé métallique tel que défini dans la revendication 14.

14. Procédé de fabrication d'une batterie Ni/MH selon l'une quelconque des revendications 11 à 13, comprenant les étapes suivantes:
(a) fabrication d'un matériau de revêtement par condensation hydrolytique d'au moins un silane de la formule (I)
RₐR'_{b}SiX_{4-a-b} (I)
dans laquelle les substituants R, R' et X peuvent être respectivement identiques ou différents et dans laquelle R représente un radical organiquement réticulable ou réticulé lié au silicium par un carbone, R' représente un radical non réticulable organiquement lié au silicium par un carbone, X est un groupe hydrolysable dans des conditions d'hydrolyse ou séparable du silicium ou OH, a est 1 ou 2, b est 0 ou 1 et a+b peut être 1 ou 2, dans un solvant,
(b) dépôt de ce matériau de revêtement sur des particules renfermant un noyau métallique, qui est approprié pour accumuler de l'hydrogène, ou qui contient de l'hydrogène sous forme accumulée,
(c) élimination d'au moins une partie du solvant et augmentation de la température des particules revêtues à 40-70°C,
(d) façonnage des particules revêtues à une forme d'électrode, et
(e) assemblage du matériau façonné suivant l'étape (d) avec les autres composants de la batterie Ni/MH.
